# EUROPEAN PATENT SPECIFICATION

(11) **EP 4 459 141 B1**
(45) Date of publication and mention of the grant of the patent: **24.06.2026**
(21) Application number: 23829685.9
(22) Date of filing: 28.04.2023
(51) Int. Cl.: F16C 11/04, H04M 1/02, G06F 1/16

(54) **ROTATING SHAFT MECHANISM AND ELECTRONIC DEVICE**
DREHWELLENMECHANISMUS UND ELEKTRONISCHE VORRICHTUNG
MÉCANISME À ARBRE TOURNANT ET DISPOSITIF ÉLECTRONIQUE

(30) Priority: 01.07.2022 CN 202221680552 U
(43) Date of publication of application: 06.11.2024
(73) Proprietor: Honor Device Co., Ltd., Shenzhen, Guangdong 518040 (CN)
(72) Inventor: GAO, Mingqian, Shenzhen, Guangdong 518040 (CN); ZHANG, Yaolei, Shenzhen, Guangdong 518040 (CN)
(74) Representative: Beder, Jens
(86) International application number: PCT/CN2023/091575
(87) International publication number: WO 2024/001499

(56) References cited:
- CN-A- 113 194 183
- CN-A- 114 658 752
- CN-U- 216 447 291
- US-A1- 2015 233 162

## Description

Embodiments of this application claim priority to Chinese Patent Application No. 202221680552.8, filed with the China National Intellectual Property Administration on July 1, 2022 and entitled "ROTATING SHAFT MECHANISM AND ELECTRONIC DEVICE".

### TECHNICAL FIELD

Embodiments of this application relate to the field of electronic products, and in particular, to a rotating shaft mechanism and an electronic device.

### BACKGROUND

Two groups of middle frames of an electronic device, for example, a terminal with a foldable screen, are rotatably connected by using a rotating shaft mechanism to implement folding rotation. With development of a lightweight design requirement of the terminal with a foldable screen, a requirement on design of the rotating shaft mechanism is also increasingly high. How to take a compact structure and small space occupation into account on the basis of rotation stability of the rotating shaft mechanism is a technical problem encountered by a person skilled in the art. Document CN 113 194 183 A describes a folding mechanism comprising a base part, a first shell base, a second shell base, a first screen supporting plate, a second screen supporting plate and a third screen supporting plate.

### SUMMARY

Embodiments of this application provide a rotating shaft mechanism with high rotation stability and small space occupation and an electronic device. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

In a specific implementation, a rotating shaft mechanism includes a base, a first swing arm, and a second swing arm. Both a first end of the first swing arm and a first end of the second swing arm are rotatably connected to a same side of the base, rotation axes of the first swing arm and the second swing arm are parallel, the rotating shaft mechanism further includes a limiting member disposed separately from the base, the limiting member is connected to a main body portion of an electronic device integrally, fixedly, or in a limiting manner, the rotating shaft mechanism further includes a lever body, and the lever body extends parallel to a direction of the rotation axis, and is supported on and connected to all of the first swing arm, the second swing arm, and the limiting member. One of the first swing arm and the second swing arm may be a main swing arm fixedly connected to the main body portion, and the other is an auxiliary swing arm that can slide relative to the main body portion during rotation. A rotating shaft mechanism formed in such a manner can have relatively high rotation flexibility and support strength. Certainly, alternatively, both the first swing arm and the second swing arm may be auxiliary swing arms or main swing arms. This is properly set based on the electronic device.

When the rotating shaft mechanism in this application is specifically applied to the electronic device, the limiting member may be fastened to the main body portion of the electronic device, so that a fastening area between the rotating shaft mechanism and the main body portion is increased, and support stability is relatively high, thereby meeting a rotation stability use requirement of the rotating shaft mechanism and improving reliability of the rotating shaft. In addition, the limiting member is disposed separately from the base, and there is no direct connection structure between the limiting member and the base, so that a structure of the rotating shaft mechanism is simplified, and the rotating shaft mechanism has a compact structure, and occupies relatively small space, thereby meeting a lightweight design requirement of the electronic device.

In an example, the first swing arm is fixedly connected to the main body portion, and the second swing arm is capable of sliding relative to the main body portion during rotation. In this example, both the first swing arm and the limiting member are fixedly connected to the main body portion, so that a support area is relatively large. In addition, the second swing arm is not connected to the main body portion. The second swing arm and the main body portion can move relative to each other during rotation. The second swing arm may be inserted into a door panel of the electronic device to drive the door panel to rotate. Therefore, rotation flexibility of the rotating shaft mechanism is relatively high.

In an example, the lever body is connected to the first swing arm and the limiting member in a limiting manner to rotate synchronously with the first swing arm and the limiting member, and the second swing arm is provided with an elongated sliding groove that fits sliding of the lever body. The lever body may be fastened to the first swing arm and/or the limiting member through interference fit. Certainly, the lever body may alternatively be limited on the first swing arm and the limiting member through snap-fitting or the like, so that the lever body, the first swing arm, and the limiting member rotate synchronously as a whole. Structures of the first swing arm and the limiting member in the rotating shaft mechanism except for the elongated sliding groove on the second swing arm are relatively simple, and processing costs are relatively low.

In an example, the first swing arm, the second swing arm, and the limiting member are sequentially arranged in the direction of the rotation axis, one end of the lever body is fixedly connected to the first swing arm, and the other end of the lever body passes through the elongated sliding groove of the second swing arm, and is supported and limited on the limiting member. In this example, the first swing arm and the limiting member that are fastened relative to the main body portion are arranged on two sides of the second swing arm that can freely slide relative to the main body portion. The first swing arm and the limiting member can stably support two ends of the lever body, so that overall rotation stability of the rotating shaft mechanism is improved.

In an example, the lever body is connected to the second swing arm in a limiting manner to rotate synchronously with two swing arms, and the first swing arm and the limiting member each are provided with an elongated sliding groove that fits sliding of the lever body. In this example, the lever body and the auxiliary swing arm are fastened in a limiting manner to rotate synchronously. For a limiting manner of the lever body and the auxiliary swing arm, refer to a limiting manner related to the lever body and the first swing arm in the foregoing descriptions. The limiting manner may be shaft-hole fitting, snap-fitting, or the like.

In an example, the limiting member includes a block, and the block is provided with a mounting structure connected to the main body portion fixedly or in a limiting manner. The limiting member and the main body portion are two independent components. The limiting member is mounted in a manner of being fastened relative to the main body portion by using the mounting structure. In this way, a processing technique of the main body portion can be reduced, and assembly flexibility is high. The mounting structure may include a through hole, used for a fastening screw to pass through. Using the screw is simple and reliable, and occupies small space.

In an example, the limiting member further includes at least one of a positioning rod and a positioning slot, disposed on a surface on which the limiting member is mounted on the main body portion of the electronic device through fitting, and used for positioning and mounting the limiting member on the main body portion. In this example, structures of the positioning rod and the positioning slot can implement quick positioning of the limiting member on the main body portion, so that assembly efficiency is improved.

In an example, the limiting member further includes a first limiting portion, configured to be in sliding fit with a second limiting portion disposed on the door panel of the electronic device in a rotation process, to drive the main body portion to rotate. In this example, the limiting member is in sliding fit with the door panel by using the first limiting portion, so that rotation stability of the door panel is improved, and overall performance of the rotating shaft mechanism is enhanced.

In an example, an arc-shaped opening is disposed on an end surface that is of the limiting member and that is away from the lever body, and the first limiting portion includes the arc-shaped opening. A structure of disposing the arc-shaped opening on the end surface is simple.

In an example, a first mounting hole is disposed on an end surface that is of the limiting member and that faces a side of the lever body, an axial direction of the first mounting hole is parallel to a length direction of the lever body, and the lever body is at least partially inserted and supported in the first mounting hole. The first mounting hole may be a through hole. In this way, lever bodies of different lengths can be obtained through assembling, so that assembly flexibility is improved.

In an example, a second mounting hole is disposed on an end surface that is of the first swing arm and that faces a side of the lever body, and the lever body is fastened and mounted in the second mounting hole. The mounting manner is simple and feasible.

In an example, the first swing arm, the second swing arm, the lever body, and the limiting member form a swing arm unit, the rotating shaft mechanism includes at least two swing arm units, and two of the swing arm units are symmetrically disposed with respect to a central axis of the base. A plurality of swing arm units help improve overall rotation stability of the rotating shaft mechanism, and achieve relatively high support strength.

In an example, the first swing arm, the second swing arm, and the limiting member are sequentially arranged in the direction of the rotation axis, there is a first notch on a side that is of the second swing arm and that is away from the first swing arm, and the limiting member is at least partially located in the first notch; and/or
there is a second notch on a side that is of the second swing arm and that is close to the first swing arm, the first swing arm has an extension portion that extends into the second notch, and the lever body is fastened to the extension portion. In this way, a structure between the first swing arm, the second swing arm, and the limiting member is compact, and relatively small space is occupied in an axial direction.

According to a second aspect, the present invention further provides an electronic device, including a flexible screen and the rotating shaft mechanism in any one of the foregoing examples, and further including main body portions on two sides of the rotating shaft mechanism. The flexible screen is supported on the main body portions on the two sides; and both the first swing arm and the limiting member are connected to the main body portion fixedly, integrally, or in a limiting manner, and the first swing arm drives the main body portion to rotate during rotation.

The electronic device in this application includes the foregoing rotating shaft mechanism, and therefore also has the foregoing technical effects of the rotating shaft mechanism.

### BRIEF DESCRIPTION OF DRAWINGS

FIG. 1 is a schematic diagram in which a rotating shaft mechanism is applied to an electronic device according to an embodiment of this application;
FIG. 2 is a schematic exploded view of the electronic device shown in FIG. 1;
FIG. 3 is a partial schematic diagram existing after a rotating shaft mechanism and a main body portion in FIG. 2 are assembled;
FIG. 4 is a partial enlarged view of a structure at A in FIG. 3;
FIG. 5 is a schematic diagram of a structure of a rotating shaft mechanism in FIG. 4;
FIG. 6 is a front view of FIG. 5;
FIG. 7 is a three-dimensional schematic diagram of a limiting member according to this application;
FIG. 8 is a side view of the limiting member shown in FIG. 7;
FIG. 9 is a bottom view of the limiting member shown in FIG. 7;
FIG. 10 is a side view of the limiting member shown in FIG. 7 in another direction;
FIG. 11 is a three-dimensional schematic diagram of a first swing arm in FIG. 4; and
FIG. 12 is a three-dimensional schematic diagram of a second swing arm in FIG. 4.

### DESCRIPTION OF EMBODIMENTS

Currently, a rotating shaft mechanism of a terminal with a foldable screen is usually provided with a relatively large quantity of swing arms to be fastened to a middle frame, so that a support area between the rotating shaft mechanism and the middle frame is increased, thereby improving rotation stability of the rotating shaft mechanism. However, because there are a relatively large quantity of swing arms, correspondingly, the rotating shaft mechanism occupies relatively large space, which restricts lightweight development of the terminal with a foldable screen.

Based on the foregoing discovery, after further exploration, this application provides a rotating shaft mechanism that can take into account two factors: rotation stability and small space occupation.

In descriptions of this application, it should be noted that an orientation relationship or a positional relationship indicated by terms "left", "right", "inner", "outer", and the like is an orientation relationship or a positional relationship shown based on the accompanying drawings, and is only for ease of describing a technology, rather than indicating or implying that an apparatus or an element referred to must have a specific orientation, or be constructed or operated in a specific orientation. Therefore, the terms should not be construed as a limitation on the present invention.

In the following descriptions, terms "first", "second", and the like are merely intended for a purpose of description, and should not be understood as an indication or implication of relative importance or implicit indication of a quantity of indicated technical features. Therefore, features defined with "first", "second", and the like can explicitly or implicitly include one or more of the features.

To enable a person skilled in the art to better understand the technical solutions of the present invention, the following further describes the present invention in detail with reference to the accompanying drawings and specific embodiments.

The rotating shaft mechanism provided in embodiments of this application may be applied to an electronic device. Certainly, the rotating shaft mechanism in this application may be further applied to scenarios of a sliding door, a rotating shaft of a foldable mobile phone, an accessory rotating shaft, and the like. The electronic device may be a mobile terminal, for example, a mobile phone, a tablet computer, a tablet computer accessory, a wearable device, a vehicle-mounted device, an augmented reality (augmented reality, AR)/a virtual reality (virtual reality, VR) device, a notebook computer, an ultra-mobile personal computer (ultra-mobile personal computer, UMPC), a netbook, or a personal digital assistant (personal digital assistant, PDA), or may be a professional photography device, for example, a digital camera, a single lens reflex camera/mirrorless camera, a motion camera, a pan-tilt-zoom camera, or an unmanned aerial vehicle. A specific type of the electronic device is not limited in embodiments of this application. For ease of understanding, the following provides description by using an example in which the electronic device is a terminal with a foldable screen.

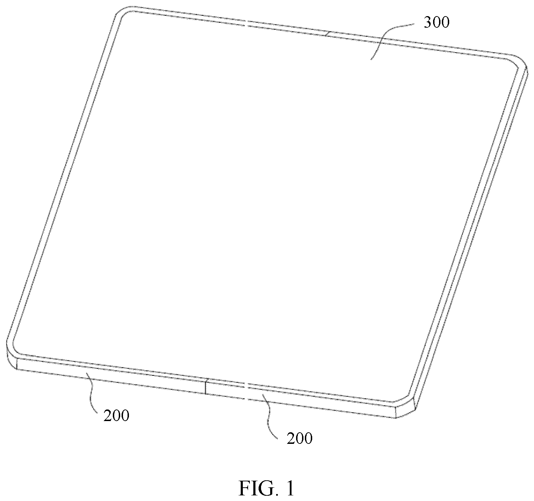

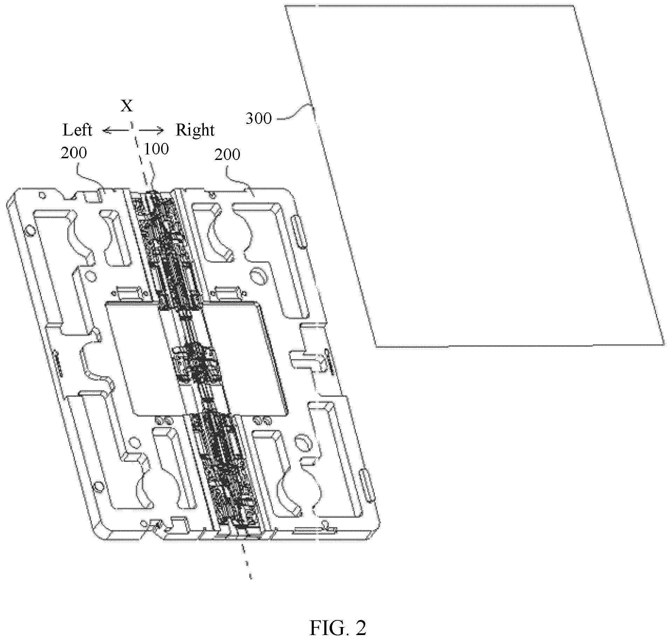

Refer to FIG. 1 and FIG. 2. FIG. 1 is a schematic diagram in which a rotating shaft mechanism is applied to an electronic device according to an embodiment of this application, and FIG. 2 is a schematic exploded view of the electronic device shown in FIG. 1. A central axis X is marked in FIG. 2.

The electronic device provided in the embodiments of this application includes a flexible screen 300, main body portions 200, and a rotating shaft mechanism 100. There are two main body portions 200. The two main body portions 200 are connected by using the rotating shaft mechanism 100. The two main body portions 200 can be folded or unfolded relative to each other by using the rotating shaft mechanism 100. For a mobile phone, the main body portion 200 may be a middle frame. The main body portion 200 depends on the electronic device. This is not specifically described herein. The accompanying drawings mainly use the mobile phone as the electronic device and the middle frame as the main body portion 200 to describe technical solutions and technical effects.

At least a part of the flexible screen 300 can be supported on the main body portion and connected to the main body portion. In a process in which the two main body portions are folded or unfolded relative to each other, the flexible screen 300 is also in a folded state or an unfolded state. Structures of the left and right main body portions may be the same, or may not be completely the same. Specific structures of the two main body portions may be stable based on a specific product, and are not specifically limited in this specification.

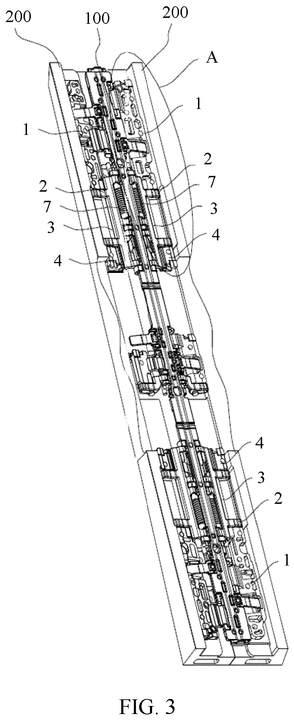

Referring to FIG. 3, in this application, the rotating shaft mechanism 100 includes a base 5, a first swing arm 1, and a second swing arm 2. At least one first swing arm 1 and at least one second swing arm 2 are disposed on each side of the base 5, and first swing arms 1 and second swing arms 2 on two sides of the base 5 are bilaterally symmetrically disposed with respect to the central axis X of the base 5. Both an inner end of the first swing arm 1 and an inner end of the second swing arm 2 are rotatably connected to the base 5. It should be noted that in this specification, a direction of approaching the central axis X is defined as "inner", and correspondingly, a direction of getting away from the central axis is defined as "outer". In this specification, an inner end portion of the first swing arm 1 is also referred to as a first end, and an outer end portion thereof is also referred to as a second end. Rotation axes of the first swing arm 1 and the second swing arm 2 are parallel. The rotation axes of the first swing arm 1 and the second swing arm 2 may be collinear, or may not be collinear.

From the foregoing descriptions that the two first swing arms 1 and the two second swing arms 2 that are located on the left and right sides of the base 5 are bilaterally symmetrically disposed with respect to the central axis X of the base 5, it can be learned that structures of the first swing arms 1 on the left and right sides of the base 5 are the same, rotatable connection structures between the first swing arms 1 and the base 5 are the same, and distances from the rotation axes to the central axis are also the same. Similarly, structures of the second swing arms 2 on the left and right sides of the base 5 are the same, and rotatable connection structures between the second swing arms 2 and the base 5 are also the same.

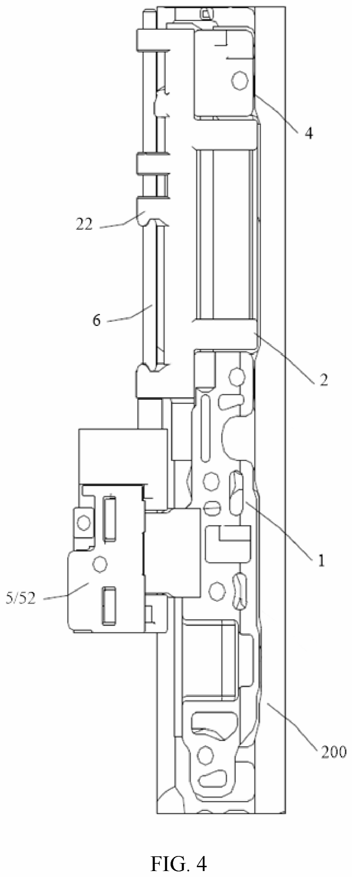

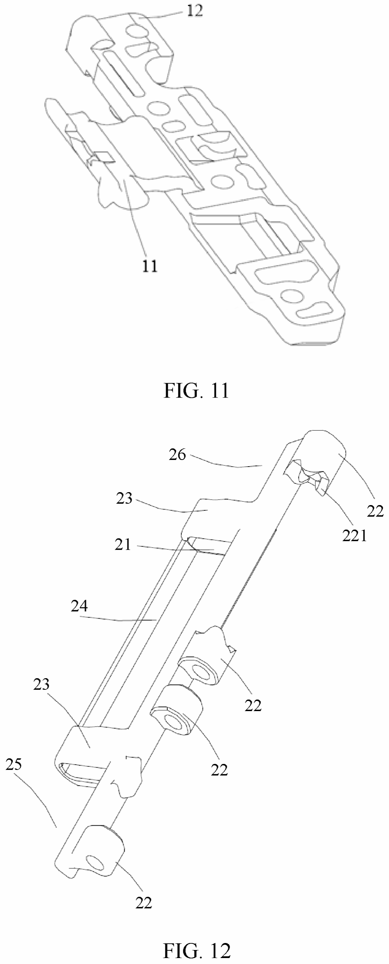

Refer to FIG. 11 for understanding. FIG. 11 is a three-dimensional schematic diagram of the first swing arm 1 in FIG. 4.

In this application, both the first swing arm 1 and the second swing arm 2 may be swing arms fixedly connected to the main body portion 200. In this specification, a swing arm fixedly connected to the main body portion 200 is defined as a main swing arm. Certainly, the first swing arm 1 and the second swing arm 2 may alternatively be swing arms that are not connected to the main body portion 200 and that can slide relative to the main body portion 200 during rotation. In this specification, a swing arm not connected to the main body portion 200 is defined as an auxiliary swing arm. Certainly, alternatively, one of the first swing arm 1 and the second swing arm 2 may be a main swing arm, and the other may be an auxiliary swing arm. The following mainly describes the technical solutions and the technical effects in detail with the first swing arm 1 being a main swing arm and the second swing arm 2 being an auxiliary swing arm.

In an example, the inner end portion of the first swing arm 1 may be an arc-shaped ring segment 11, and the arc-shaped ring segment 11 is inserted into an arc-shaped groove (not marked in the figure) disposed on the base 5 to fit rotation. Rotation of the first swing arm 1 relative to the base 5 is implemented by rotating the arc-shaped ring segment 11 into or out of the arc-shaped groove. To help mount the first swing arm 1, the base 5 may include an upper support 51 and a lower support 52, and the arc-shaped groove is formed between the upper support 51 and the lower support 52. An inner end portion of the second swing arm 2 may be of a through hole structure, and the second swing arm 2 is sleeved on a corresponding rotating shaft of the base 5 by using the through hole. Certainly, rotatable connection structures between the first swing arm 1 and the second swing arm 2 and the base 5 are not limited to those in the foregoing descriptions, and may alternatively be other structures, provided that the foregoing function that the first swing arm 1 and the second swing arm 2 can rotate around the base 5 can be fulfilled. Details are not described in this specification.

Generally, the first swing arm 1 may rotate back and forth with an included angle ranging from 0° to 90° relative to a horizontal plane. When the included angle between the first swing arm 1 and the horizontal plane is 0°, driven by the first swing arm 1, the main body portion is roughly in a horizontal state, and the flexible screen 300 may be in a fully unfolded state. In this case, the flexible screen 300 is roughly in a horizontal state as a whole. When the included angle between the first swing arm 1 and the horizontal plane is 90°, the main body portions on the two sides are driven to rotate to a vertical state, and the flexible screen 300 is in a folded state.

In a specific example, the first swing arm 1 can be fastened to the main body portions 200. Fastening herein refers to relative fastening. The first swing arm 1 provides support, and drives the main body portions to rotate, so that the two main body portions approach each other or get away from each other. An outer end portion of the second swing arm 2 is a free end portion, and the outer end portion of the second swing arm 2 may be inserted into a door panel of a terminal with a foldable screen. During rotation, the second swing arm 2 may slide back and forth relative to the door panel, and drive the door panel to rotate. The second swing arm 2 can achieve a damping function and synchronization and coordination functions of the rotating shaft mechanism 100. Refer to FIG. 12. FIG. 12 is a three-dimensional schematic diagram of the second swing arm 2 in FIG. 4. For example, the second swing arm 2 is provided with at least two protruding portions 22 that project toward the central axis, and the protruding portions 22 are provided with coaxial through holes to mount a rotating shaft body 6. In this way, the second swing arm 2 rotates back and forth with respect to the rotating shaft body 6. Two adjacent protruding portions 22 are provided with undulating surfaces 221, and the undulating surfaces 221 fit with end portion fitting surfaces (not marked in the figure) of an elastic damping component mounted between the two protruding portions to implement damping. An end portion of the elastic damping component 7 elastically abuts against the undulating surfaces of the protruding portions 22, to provide damping in a rotation process of the rotating shaft mechanism 100, and improve user experience. The elastic damping component 7 may be a spring assembly having a telescopic capability in an axial direction.

Based on different connection relationships, the flexible screen 300 is roughly divided into a middle region and fixed regions on two sides of the middle region, the middle region is approximately opposite to the rotating shaft mechanism 100, the fixed region is fastened to the main body portion, and the intermediate region is in a free state, to adapt to folding and unfolding requirements of the flexible screen 300. The door panel supports and protects the middle region of the flexible screen 300 to some extent.

The flexible screen 300 may include a display module and a transparent cover plate. The display module can display an image, a video, and the like. The display module may include structural layers such as a touch control screen, a light-emitting layer, a backplane layer, and a substrate layer. A specific structure of the display module may be selected based on different products. The display module may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a quantum dot light emitting diode (quantum dot light emitting diodes, QLED), or the like. The transparent cover plate covers an outer side of the display module to protect the display module. The transparent cover plate may be a glass cover plate, or may be of another transparent material that can provide a protection function.

The rotating shaft mechanism 100 in this application further includes a limiting member 4 disposed separately from the base 5, in other words, the limiting member 4 is relatively separated from the base 5, and the limiting member 4 is not connected to the base 5. The rotating shaft mechanism 100 is further provided with a lever body 3 that rotates synchronously with the first swing arm 1, and another end portion of the lever body 3 passes through the second swing arm 2, and is supported on the limiting member 4. When the first swing arm 1 rotates, the lever body 3 can drive the second swing arm 2 to rotate.

In an example, a second end portion of the first swing arm 1 has a mounting portion connected to the main body portion of the electronic device fixedly or in a limiting manner. The mounting portion may be a through hole. The first swing arm 1 is fixedly connected to the main body portion by using a screw, to be specific, a threaded portion of the screw passes through the through hole on the first swing arm 1 to fixedly connect to the main body portion. Certainly, the mounting portion may alternatively be of another structure. For example, the first swing arm 1 is connected to the main body portion in a manner of being fastened relative to the main body portion through bonding, welding, snap-fitting, or the like.

Similarly, the limiting member 4 may also include a mounting structure, configured to connect to the main body portion fixedly or in a limiting manner, and the mounting structure may also be a through hole 41 for a screw to pass through. Certainly, the mounting structure may alternatively be another structure, for example, the limiting member 4 is connected to the main body portion in a manner of being fastened relative to the main body portion through bonding, welding, snap-fitting, or the like.

In addition, the first swing arm 1 and the limiting member 4 may form an integral structure with the main body portion, to be specific, the main body portion, the first swing arm 1, and the limiting member 4 are integrally molded by using a molding process. For example, the main body portion, the first swing arm 1, and the limiting member 4 are integrally molded by using an injection molding process.

In this application, the technical solutions and the technical effects are further described by using an example in which the limiting member 4 is a block independent of the main body portion and the block is fixedly connected to or mounted, in a limiting manner, on the main body portion.

When the rotating shaft mechanism 100 in this application is applied to the terminal with a foldable screen, both the first swing arm 1 and the limiting member 4 are fastened to the main body portion, and the second swing arm 2 may be supported on the first swing arm 1 and the limiting member 4 by using the lever body 3 that passes through the second swing arm 2, so that a fastening area between the rotating shaft mechanism 100 and the main body portion is relatively large, and support stability is relatively high, thereby meeting a rotation stability use requirement of the rotating shaft mechanism 100. In addition, the limiting member 4 is disposed separately from the base 5, and there is no direct connection structure between the limiting member 4 and the base 5, so that a structure of the rotating shaft mechanism 100 is simplified, and the rotating shaft mechanism 100 has a compact structure, and occupies relatively small space, thereby meeting a lightweight design requirement of the electronic device.

The foregoing shows an example in which the lever body 3 is fastened to the first swing arm 1 and the lever body 3 is movably connected to the second swing arm 2. Certainly, the lever body 3 may alternatively be fastened to the second lever body 2, and be movably connected to the first swing arm 1 and the limiting member 4, to be specific, elongated sliding grooves are disposed on the first swing arm 1 and the limiting member 4, and the lever body 3 may slide in the elongated sliding grooves of the first swing arm 1 and the limiting member 4 during rotation.

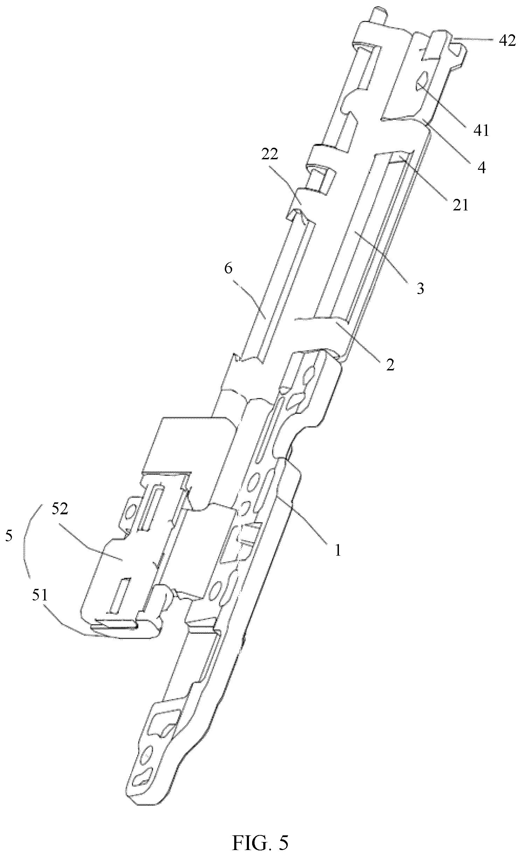

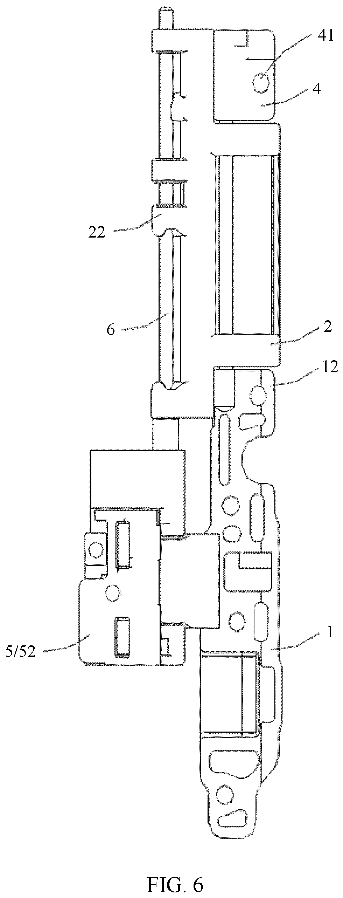

Refer to FIG. 4 to FIG. 6. FIG. 4 is a partial enlarged diagram of a structure at A in FIG. 3, FIG. 5 is a schematic diagram of the rotating shaft mechanism in FIG. 4, and FIG. 6 is a front view of FIG. 5.

In this application, the first swing arm 1, the second swing arm 2, and the limiting member 4 are sequentially arranged along the rotation axis. Certainly, an arrangement manner of the first swing arm 1, the second swing arm 2, and the limiting member 4 is not limited to that in the descriptions of this specification. It is feasible that the first swing arm 1 is located between the second swing arm 2 and the limiting member 4 or the limiting member 4 is located between the first swing arm 1 and the second swing arm 2. The second swing arm 2 is provided with an elongated sliding groove 21, and an end portion of the lever body 3 passes through the elongated sliding groove 21, and is connected to and supports the limiting member 4. There may be one, two, or more elongated sliding grooves 21. Refer to FIG. 12. FIG. 12 provides a specific structure of a sliding groove. The second swing arm 2 includes a tubular body 23, a slit 24 is disposed in a middle of a peripheral wall of the tubular body 23, and sliding grooves 21 are formed on two sides of the slit 24 on the tubular body 23. A specific form of the elongated sliding groove 21 is not limited to that in the descriptions of this specification.

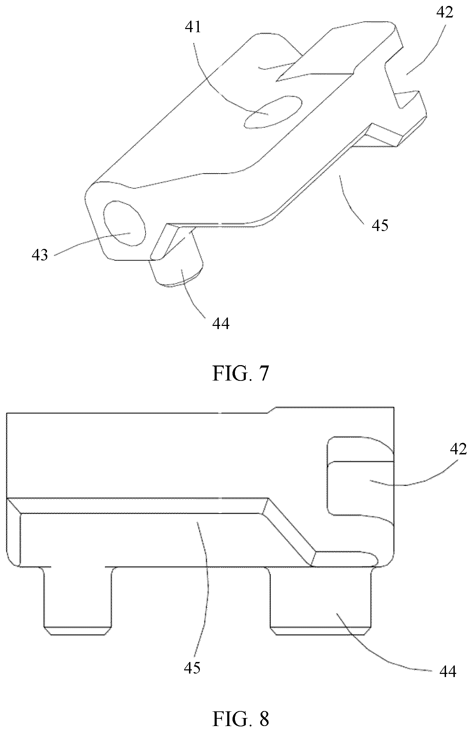

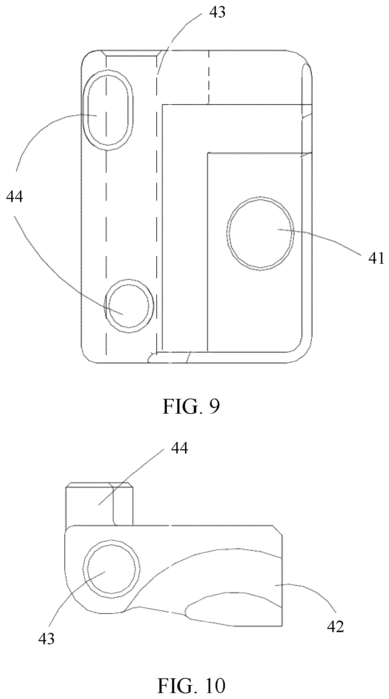

Refer to FIG. 7 to FIG. 10. FIG. 7 is a three-dimensional schematic diagram of a limiting member according to this application, FIG. 8 is a side view of the limiting member shown in FIG. 7, FIG. 9 is a bottom view of the limiting member shown in FIG. 7, and FIG. 10 is a side view of the limiting member shown in FIG. 7 in another direction.

When the limiting member 4 and the main body portion are two independent components, to improve assembly efficiency, the limiting member 4 may be further provided with a positioning rod and/or a positioning slot, in other words, the limiting member 4 is provided with at least one of the positioning rod and the positioning slot. For each of the positioning rod and the positioning slot, there may be one or at least two such structures. The positioning rod and/or the positioning slot are or is disposed on a surface on which the limiting member 4 is mounted on the main body portion of the electronic device through fitting, and used for positioning and mounting the limiting member on the main body portion. In other words, on the limiting member 4, only the positioning rod may be processed, or only the positioning slot may be processed, or both the positioning rod and the positioning slot may be processed. There may be one, two, or more positioning rods and positioning slots. The figure shows a specific implementation in which two positioning rods 44 are disposed on the limiting member 4.

Referring to FIG. 7 and FIG. 10, in an example, an arc-shaped opening 42 is disposed on an end surface that is of the limiting member 4 and that is away from the second swing arm 2, and an arc-shaped plate (not shown in the figure) inserted into the arc-shaped opening 42 or the like is disposed on the door panel. When the main body portion rotates, the arc-shaped plate of the door panel can slide inside the arc-shaped opening 42. In this way, the limiting member 4 can drive the door panel to relatively rotate, so that rotation stability of the door panel can be further improved.

In other words, the arc-shaped opening 42 on the limiting member 4 is equivalent to a first limiting portion, and the arc-shaped plate is equivalent to a second limiting portion. Through fitting between the first limiting portion and the second limiting portion, the limiting member 4 can drive the door panel to rotate synchronously and coordinately in a process of rotating with the main body portion. A structure of the first limiting member 4 is not limited to a structure of the arc-shaped opening 42, or may be another structure, provided that the foregoing function can be fulfilled.

In an example, to adapt to a shape of the main body portion, a recessed portion 45 is further disposed on a surface that is of the limiting member 4 and that faces the main body portion, to avoid a corresponding structure on the main body portion. A specific shape of the recessed portion 45 depends on a specific product.

In a specific example, a first mounting hole 43 is disposed on an end surface that is of the limiting member 4 and that faces the second swing arm 2, an axial direction of the first mounting hole 43 is parallel to a length direction of the lever body 3, and the lever body 3 is at least partially inserted and can be supported in the first mounting hole 43. The first mounting hole 43 may be in interference fit or clearance fit with the lever body 3.

A shape of the first mounting hole 43 is related to a shape of the lever body 3. When the end portion of the lever body 3 is a cylindrical shaft segment, the first mounting hole 43 may be a hole having a circular cross-section. The first mounting hole 43 may be disposed as a through hole. In this way, a length of the lever body 3 does not need to be considered in a processing process of the first mounting hole, and lever bodies 3 of different lengths can be mounted. Certainly, the first mounting hole may alternatively be a blind hole.

In this embodiment, an end portion that is of the lever body 3 and that is away from the first swing arm 1 passes through the second swing arm 2, and then is directly inserted into the first mounting hole. Therefore, the structure is simple and easy to assemble.

In this application, a second mounting hole is disposed on an end surface that is of the first swing arm 1 and that faces the second swing arm 2, and the lever body 3 is fastened and mounted in the second mounting hole. The lever body 3 and the first swing arm 1 are detachable structures, and are assembled into a whole after being separately molded. Therefore, a processing technique of the first swing arm 1 and the lever body 3 is reduced. In addition, the lever body 3 and the first swing arm 1 may be separately replaced because the lever body 3 and the first swing arm 1 are separated structures, so that maintenance costs of the electronic device are reduced.

As described above, there is at least one first swing arm 1 and at least one second swing arm 2 on each side of the base 5. In this application, a component formed by the first swing arm 1, the second swing arm 2, the lever body 3, and the limiting member 4 is defined as a swing arm unit, and one swing arm unit includes at least one first swing arm 1, second swing arm 2, lever body 3, and limiting member 4. The rotating shaft mechanism 100 includes at least two swing arm units, and two of the swing arm units are symmetrically disposed with respect to the central axis of the base 5.

The rotating shaft mechanism 100 may also be provided with one, two, or more swing arm units in the direction of the rotation axis. The figure shows a specific implementation in which two swing arm units are disposed in the axial direction.

To make the structure of the rotating shaft mechanism 100 as compact as possible, the first swing arm 1, the second swing arm 2, and the limiting member 4 may be arranged in the following manner.

Refer to FIG. 12, FIG. 5, and FIG. 6 for understanding. In this embodiment, there is a first notch 25 on a side that is of the second swing arm 2 and that is away from the first swing arm 1, and the limiting member 4 is at least partially located in the first notch 25, in other words, projections of the limiting member 4 and the second swing arm 2 in an axial plane partially overlap. The axial plane is a plane that is perpendicular to the flexible screen 300 in an unfolded state and that is parallel to the direction of the rotation axis. FIG. 5 and FIG. 6 show a specific implementation in which the limiting member 4 is almost completely located in the first notch 25. Certainly, the limiting member 4 may alternatively be partially located in the first notch 25. In this case, a structure between the second swing arm 2 and the limiting member 4 is compact, and occupied space is relatively small in the axial direction.

In this application, there is also a second notch 26 on a side that is of the second swing arm 2 and that is close to the first swing arm 1, the first swing arm 1 has an extension portion 12 that extends into the second notch 26, and the lever body 3 is fastened to the extension portion 12. In this case, projections of the first swing arm 1 and the second swing arm 2 in the axial plane partially overlap. In this example, the first swing arm 1 and the second swing arm 2 are compact in structure, and occupy relatively small axial space while meeting a mounting requirement.

An electronic device in this application includes the rotating shaft mechanism 100 in the foregoing embodiments, and therefore, also has the foregoing technical effects of the rotating shaft mechanism 100.

The principle and implementations of this application are described herein by using specific examples. The descriptions of the foregoing embodiments are merely used for helping understand the method and core ideas of this application. It should be noted that a person of ordinary skill in the art may make several modifications without departing from the protection scope of the claims of this application.

## Claims

1. A rotating shaft mechanism (100) for an electronic device, comprising a base (5), a first swing arm (1), a second swing arm (2), a rotating shaft body (6), and a limiting member (4), wherein:
the base (5) comprises two sides, the two sides of the base (5) are bilaterally symmetrically disposed with respect to a central axis (X) of the base (5);
both a first end of the first swing arm (1) and a first end of the second swing arm (2) are rotatably connected to a same side of the base (5), wherein the rotation axes of the first swing arm (1) and the second swing arm (2) are parallel to the central axis (X) of the base (5), and the second swing arm (2) is rotatably connected to the base (5) via the rotating shaft body (6);
the limiting member (4) is disposed separately from the base (5) and comprises a mounting structure configured to connect the limiting member (4) to a main body portion (200) of the electronic device integrally, fixedly, or in a limiting manner;
**characterized in that**
the rotating shaft mechanism (100) further comprises a lever body (3), wherein the lever body (3) extends parallel to a direction of the rotation axes, and is supported on and connected to all of the first swing arm (1), the second swing arm (2), and the limiting member (4).

2. The rotating shaft mechanism (100) according to claim 1, wherein the first swing arm (1) is fixedly connected to the main body portion (200), and the second swing arm (2) is capable of sliding relative to the main body portion (200) during rotation.

3. The rotating shaft mechanism (100) according to claim 2, wherein the lever body (3) is connected to the first swing arm (1) and the limiting member (4) in a limiting manner to rotate synchronously with the first swing arm (1) and the limiting member (4), and the second swing arm (2) is provided with an elongated sliding groove (21) that fits sliding of the lever body (3).

4. The rotating shaft mechanism (100) according to claim 3, wherein the first swing arm (1), the second swing arm (2), and the limiting member (4) are sequentially arranged in the direction of the rotation axes, one end of the lever body (3) is fixedly connected to the first swing arm (1), and the other end of the lever body (3) passes through the elongated sliding groove (21) of the second swing arm (2), and is supported and limited on the limiting member (4).

5. The rotating shaft mechanism (100) according to claim 2, wherein the lever body (3) is connected to the second swing arm (2) in a limiting manner to rotate synchronously with the second swing arm (2), and the first swing arm (1) and the limiting member (4) each are provided with an elongated sliding groove (21) that fits sliding of the lever body (3).

6. The rotating shaft mechanism (100) according to any one of claims 1 to 5, wherein the limiting member (4) comprises a block, and the block is connected to the main body portion (200) by using the mounting structure fixedly or in a limiting manner.

7. The rotating shaft mechanism (100) according to claim 6, wherein the limiting member (4) further comprises at least one of a positioning rod (44) and a positioning slot, disposed on a surface on which the limiting member (4) is mounted on the main body portion (200) of the electronic device through fitting, and used for positioning and mounting the limiting member (4) on the main body portion (200).

8. The rotating shaft mechanism (100) according to any one of claims 6 or 7, wherein the limiting member (4) further comprises a first limiting portion, configured to be in sliding fit with a second limiting portion disposed on the main body portion (200) of the electronic device in a rotation process, to drive the main body portion (200) to rotate;
an arc-shaped opening (42) is disposed on an end surface that is of the limiting member (4) and that is away from the lever body (3), and the first limiting portion comprises the arc-shaped opening (42).

9. The rotating shaft mechanism (100) according to claim 6, wherein the limiting member (4) further comprises a first limiting portion, configured to be in sliding fit with a second limiting portion disposed on the main body portion (200) of the electronic device in a rotation process, to drive the main body portion (200) to rotate.

10. The rotating shaft mechanism (100) according to claim 9, wherein an arc-shaped opening (42) is disposed on an end surface that is of the limiting member (4) and that is away from the lever body (3), and the first limiting portion comprises the arc-shaped opening (42).

11. The rotating shaft mechanism (100) according to any one of claims 1 to 5, wherein a first mounting hole (43) is disposed on an end surface that is of the limiting member (4) and that faces a side of the lever body (3), an axial direction of the first mounting hole (43) is parallel to a length direction of the lever body (3), and the lever body (3) is at least partially inserted and supported in the first mounting hole (43).

12. The rotating shaft mechanism (100) according to any one of claims 1 to 5, wherein a second mounting hole is disposed on an end surface that is of the first swing arm (1) and that faces a side of the lever body (3), and the lever body (3) is fastened and mounted in the second mounting hole.

13. The rotating shaft mechanism (100) according to any one of claims 1 to 5, wherein the first swing arm (1), the second swing arm (2), the lever body (3), and the limiting member (4) form a swing arm unit, the rotating shaft mechanism (100) comprises at least two swing arm units, and two of the swing arm units are symmetrically disposed with respect to the central axis (X) of the base (5).

14. The rotating shaft mechanism (100) according to any one of claims 1 to 5, wherein the first swing arm (1), the second swing arm (2), and the limiting member (4) are sequentially arranged in the direction of the rotation axes, there is a first notch (25) on a side that is of the second swing arm (2) and that is away from the first swing arm (1), and the limiting member (4) is at least partially located in the first notch (25); and/or
there is a second notch (26) on a side that is of the second swing arm (2) and that is close to the first swing arm (1), the first swing arm (1) has an extension portion (12) that extends into the second notch (26), and the lever body (3) is fastened to the extension portion (12).

15. An electronic device, comprising:
the rotating shaft mechanism (100) according to claim 13;
two main body portions (200) connected via the rotating shaft mechanism (100) on two sides of the rotating shaft mechanism (100) with respect to the central axis (X) of the base (5); and
a flexible screen (300) that is supported on the main body portions (200) on the two sides;
wherein both the first swing arm (1) and the limiting member (4) of the at least two swing arm units are connected to the corresponding main body portions (200) fixedly, integrally, or in a limiting manner; and
wherein the first swing arms (1) are configured to drive the corresponding main body portions (200) to rotate during rotation.

## Patentansprüche

1. Drehwellenmechanismus (100) für eine elektronische Vorrichtung, umfassend eine Basis (5), einen ersten Schwenkarm (1), einen zweiten Schwenkarm (2), einen Drehwellenkörper (6) und ein Begrenzungselement (4), wobei:
die Basis (5) zwei Seiten umfasst, wobei die zwei Seiten der Basis (5) in Bezug auf eine Mittelachse (X) der Basis (5) bilateral symmetrisch angeordnet sind;
sowohl ein erstes Ende des ersten Schwenkarms (1) als auch ein erstes Ende des zweiten Schwenkarms (2) drehbar mit einer gleichen Seite der Basis (5) verbunden sind, wobei die Drehachsen des ersten Schwenkarms (1) und des zweiten Schwenkarms (2) parallel zur Mittelachse (X) der Basis (5) verlaufen und der zweite Schwenkarm (2) über den Drehwellenkörper (6) drehbar mit der Basis (5) verbunden ist;
das Begrenzungselement (4) separat von der Basis (5) angeordnet ist und eine Montagestruktur umfasst, die dazu konfiguriert ist, das Begrenzungselement (4) integral, fest oder in einer begrenzenden Weise mit einem Hauptkörperabschnitt (200) der elektronischen Vorrichtung zu verbinden;
**dadurch gekennzeichnet, dass**
der Drehwellenmechanismus (100) ferner einen Hebelkörper (3) umfasst, wobei sich der Hebelkörper (3) parallel zu einer Richtung der Drehachsen erstreckt und auf dem ersten Schwenkarm (1), dem zweiten Schwenkarm (2) und dem Begrenzungselement (4) gelagert und mit diesen verbunden ist.

2. Drehwellenmechanismus (100) nach Anspruch 1, wobei der erste Schwenkarm (1) fest mit dem Hauptkörperabschnitt (200) verbunden ist und der zweite Schwenkarm (2) während der Drehung relativ zum Hauptkörperabschnitt (200) gleiten kann.

3. Drehwellenmechanismus (100) nach Anspruch 2, wobei der Hebelkörper (3) in einer begrenzenden Weise mit dem ersten Schwenkarm (1) und dem Begrenzungselement (4) verbunden ist, um synchron mit dem ersten Schwenkarm (1) und dem Begrenzungselement (4) zu rotieren, und wobei der zweite Schwenkarm (2) mit einer länglichen Gleitnut (21) versehen ist, die an das Gleiten des Hebelkörpers (3) angepasst ist.

4. Drehwellenmechanismus (100) nach Anspruch 3, wobei der erste Schwenkarm (1), der zweite Schwenkarm (2) und das Begrenzungselement (4) nacheinander in Richtung der Drehachsen angeordnet sind, wobei ein Ende des Hebelkörpers (3) fest mit dem ersten Schwenkarm (1) verbunden ist und das andere Ende des Hebelkörpers (3) durch die längliche Gleitnut (21) des zweiten Schwenkarms (2) verläuft und auf dem Begrenzungselement (4) gelagert und begrenzt ist.

5. Drehwellenmechanismus (100) nach Anspruch 2, wobei der Hebelkörper (3) in einer begrenzenden Weise mit dem zweiten Schwenkarm (2) verbunden ist, um synchron mit dem zweiten Schwenkarm (2) zu rotieren, und wobei der erste Schwenkarm (1) und das Begrenzungselement (4) jeweils mit einer länglichen Gleitnut (21) versehen sind, die an das Gleiten des Hebelkörpers (3) angepasst ist.

6. Drehgelenkmechanismus (100) nach einem der Ansprüche 1 bis 5, wobei das Begrenzungselement (4) einen Block umfasst und der Block unter Verwendung der Montagestruktur fest oder begrenzend mit dem Hauptkörperabschnitt (200) verbunden ist.

7. Drehgelenkmechanismus (100) nach Anspruch 6, wobei das Begrenzungselement (4) ferner mindestens einen Positionierstab (44) und einen Positionierschlitz umfasst, die auf einer Oberfläche angeordnet sind, auf der das Begrenzungselement (4) durch Passung am Hauptkörperabschnitt (200) der elektronischen Vorrichtung montiert ist, und die dazu dienen, das Begrenzungselement (4) am Hauptkörperabschnitt (200) zu positionieren und zu montieren.

8. Drehgelenkmechanismus (100) nach einem der Ansprüche 6 oder 7, wobei das Begrenzungselement (4) ferner einen ersten Begrenzungsabschnitt umfasst, der so konfiguriert ist, dass er während eines Rotationsvorgangs in Gleitpassung mit einem zweiten Begrenzungsabschnitt steht, der am Hauptkörperabschnitt (200) der elektronischen Vorrichtung angeordnet ist, um den Hauptkörperabschnitt (200) zur Rotation anzutreiben;
wobei eine bogenförmige Öffnung (42) auf einer Endfläche des Begrenzungselements (4) angeordnet ist, die vom Hebelkörper (3) abgewandt ist, und der erste Begrenzungsabschnitt die bogenförmige Öffnung (42) umfasst.

9. Drehgelenkmechanismus (100) nach Anspruch 6, wobei das Begrenzungselement (4) ferner einen ersten Begrenzungsabschnitt umfasst, der so konfiguriert ist, dass er während eines Rotationsvorgangs in Gleitpassung mit einem zweiten Begrenzungsabschnitt steht, der am Hauptkörperabschnitt (200) der elektronischen Vorrichtung angeordnet ist, um den Hauptkörperabschnitt (200) zur Rotation anzutreiben.

10. Drehgelenkmechanismus (100) nach Anspruch 9, wobei eine bogenförmige Öffnung (42) auf einer Endfläche des Begrenzungselements (4) angeordnet ist, die vom Hebelkörper (3) abgewandt ist, und der erste Begrenzungsabschnitt die bogenförmige Öffnung (42) umfasst.

11. Drehgelenkmechanismus (100) nach einem der Ansprüche 1 bis 5, wobei ein erstes Montageloch (43) auf einer Endfläche des Begrenzungselements (4) angeordnet ist, die einer Seite des Hebelkörpers (3) zugewandt ist, wobei eine axiale Richtung des ersten Montagelochs (43) parallel zu einer Längsrichtung des Hebelkörpers (3) verläuft und der Hebelkörper (3) zumindest teilweise in das erste Montageloch (43) eingesetzt und darin abgestützt ist.

12. Drehgelenkmechanismus (100) nach einem der Ansprüche 1 bis 5, wobei ein zweites Montageloch auf einer Endfläche des ersten Schwenkarms (1) angeordnet ist, die einer Seite des Hebelkörpers (3) zugewandt ist, und der Hebelkörper (3) in dem zweiten Montageloch befestigt und montiert ist.

13. Drehwellenmechanismus (100) nach einem der Ansprüche 1 bis 5, wobei der erste Schwingarm (1), der zweite Schwingarm (2), der Hebelkörper (3) und das Begrenzungselement (4) eine Schwingarmeinheit bilden, der Drehwellenmechanismus (100) mindestens zwei Schwingarmeinheiten umfasst und zwei der Schwingarmeinheiten symmetrisch in Bezug auf die Mittelachse (X) der Basis (5) angeordnet sind.

14. Drehwellenmechanismus (100) nach einem der Ansprüche 1 bis 5, wobei der erste Schwingarm (1), der zweite Schwingarm (2) und das Begrenzungselement (4) nacheinander in Richtung der Drehachsen angeordnet sind, wobei sich an einer Seite des zweiten Schwingarms (2), die vom ersten Schwingarm (1) abgewandt ist, eine erste Aussparung (25) befindet und das Begrenzungselement (4) zumindest teilweise in der ersten Aussparung (25) angeordnet ist; und/oder
wobei sich an einer Seite des zweiten Schwingarms (2), die dem ersten Schwingarm (1) zugewandt ist, eine zweite Aussparung (26) befindet, der erste Schwingarm (1) einen Verlängerungsabschnitt (12) aufweist, der sich in die zweite Aussparung (26) erstreckt, und der Hebelkörper (3) am Verlängerungsabschnitt (12) befestigt ist.

15. Elektronische Vorrichtung, umfassend:
den Drehwellenmechanismus (100) nach Anspruch 13;
zwei Hauptkörperteile (200), die über den Drehwellenmechanismus (100) auf zwei Seiten des Drehwellenmechanismus (100) in Bezug auf die Mittelachse (X) der Basis (5) verbunden sind; und
einen flexiblen Bildschirm (300), der auf den Hauptkörperteilen (200) auf den beiden Seiten gestützt wird;
wobei sowohl der erste Schwingarm (1) als auch das Begrenzungselement (4) der mindestens zwei Schwingarmeinheiten fest, integral oder auf begrenzende Weise mit den entsprechenden Hauptkörperteilen (200) verbunden sind; und
wobei die ersten Schwingarme (1) so konfiguriert sind, dass sie die entsprechenden Hauptkörperteile (200) während der Drehung antreiben.

## Revendications

1. Un mécanisme d'arbre rotatif (100) pour un dispositif électronique, comprenant une base (5), un premier bras oscillant (1), un second bras oscillant (2), un corps d'arbre rotatif (6) et un élément de limitation (4), dans lequel :
la base (5) comprend deux côtés, les deux côtés de la base (5) sont disposés de manière bilatéralement symétrique par rapport à un axe central (X) de la base (5) ;
une première extrémité du premier bras oscillant (1) et une première extrémité du second bras oscillant (2) sont toutes deux reliées de manière rotative à un même côté de la base (5), dans lequel les axes de rotation du premier bras oscillant (1) et du second bras oscillant (2) sont parallèles à l'axe central (X) de la base (5), et le second bras oscillant (2) est relié de manière rotative à la base (5) via le corps d'arbre rotatif (6) ;
l'élément de limitation (4) est disposé séparément de la base (5) et comprend une structure de montage configurée pour relier l'élément de limitation (4) à une partie de corps principal (200) du dispositif électronique de manière intégrale, fixe ou de limitation ;
**caractérisé en ce que**
le mécanisme d'arbre rotatif (100) comprend en outre un corps de levier (3), dans lequel le corps de levier (3) s'étend parallèlement à une direction des axes de rotation, et est supporté sur et relié à l'ensemble du premier bras oscillant (1), du second bras oscillant (2) et de l'élément de limitation (4).

2. Le mécanisme d'arbre rotatif (100) selon la revendication 1, dans lequel le premier bras oscillant (1) est relié de manière fixe à la partie de corps principal (200), et le second bras oscillant (2) est capable de coulisser par rapport à la partie de corps principal (200) pendant la rotation.

3. Le mécanisme d'arbre rotatif (100) selon la revendication 2, dans lequel le corps de levier (3) est relié au premier bras oscillant (1) et à l'élément de limitation (4) de manière limitative pour tourner de manière synchrone avec le premier bras oscillant (1) et l'élément de limitation (4), et le second bras oscillant (2) est pourvu d'une rainure de coulissement allongée (21) qui s'adapte au coulissement du corps de levier (3).

4. Le mécanisme d'arbre rotatif (100) selon la revendication 3, dans lequel le premier bras oscillant (1), le second bras oscillant (2) et l'élément de limitation (4) sont disposés séquentiellement dans la direction des axes de rotation, une extrémité du corps de levier (3) est reliée de manière fixe au premier bras oscillant (1), et l'autre extrémité du corps de levier (3) passe à travers la rainure de coulissement allongée (21) du second bras oscillant (2), et est supportée et limitée sur l'élément de limitation (4).

5. Le mécanisme d'arbre rotatif (100) selon la revendication 2, dans lequel le corps de levier (3) est relié au second bras oscillant (2) de manière limitative pour tourner de manière synchrone avec le second bras oscillant (2), et le premier bras oscillant (1) et l'élément de limitation (4) sont chacun pourvus d'une rainure de coulissement allongée (21) qui s'adapte au coulissement du corps de levier (3).

6. Le mécanisme d'arbre rotatif (100) selon l'une quelconque des revendications 1 à 5, dans lequel l'élément de limitation (4) comprend un bloc, et le bloc est relié à la partie de corps principal (200) en utilisant la structure de montage de manière fixe ou de manière limitante.

7. Le mécanisme d'arbre rotatif (100) selon la revendication 6, dans lequel l'élément de limitation (4) comprend en outre au moins l'un parmi une tige de positionnement (44) et une fente de positionnement, disposées sur une surface sur laquelle l'élément de limitation (4) est monté sur la partie de corps principal (200) du dispositif électronique par emboîtement, et utilisées pour positionner et monter l'élément de limitation (4) sur la partie de corps principal (200).

8. Le mécanisme d'arbre rotatif (100) selon l'une quelconque des revendications 6 ou 7, dans lequel l'élément de limitation (4) comprend en outre une première partie de limitation, configurée pour être en ajustement coulissant avec une seconde partie de limitation disposée sur la partie de corps principal (200) du dispositif électronique au cours d'un processus de rotation, pour entraîner la partie de corps principal (200) en rotation ;
une ouverture en forme d'arc (42) est disposée sur une surface d'extrémité qui appartient à l'élément de limitation (4) et qui est éloignée du corps de levier (3), et la première partie de limitation comprend l'ouverture en forme d'arc (42).

9. Le mécanisme d'arbre rotatif (100) selon la revendication 6, dans lequel l'élément de limitation (4) comprend en outre une première partie de limitation, configurée pour être en ajustement coulissant avec une seconde partie de limitation disposée sur la partie de corps principal (200) du dispositif électronique au cours d'un processus de rotation, pour entraîner la partie de corps principal (200) en rotation.

10. Le mécanisme d'arbre rotatif (100) selon la revendication 9, dans lequel une ouverture en forme d'arc (42) est disposée sur une surface d'extrémité qui appartient à l'élément de limitation (4) et qui est éloignée du corps de levier (3), et la première partie de limitation comprend l'ouverture en forme d'arc (42).

11. Le mécanisme d'arbre rotatif (100) selon l'une quelconque des revendications 1 à 5, dans lequel un premier trou de montage (43) est disposé sur une surface d'extrémité qui appartient à l'élément de limitation (4) et qui fait face à un côté du corps de levier (3), une direction axiale du premier trou de montage (43) est parallèle à une direction longitudinale du corps de levier (3), et le corps de levier (3) est au moins partiellement inséré et supporté dans le premier trou de montage (43).

12. Le mécanisme d'arbre rotatif (100) selon l'une quelconque des revendications 1 à 5, dans lequel un second trou de montage est disposé sur une surface d'extrémité qui appartient au premier bras oscillant (1) et qui fait face à un côté du corps de levier (3), et le corps de levier (3) est fixé et monté dans le second trou de montage.

13. Le mécanisme d'arbre rotatif (100) selon l'une quelconque des revendications 1 à 5, dans lequel le premier bras oscillant (1), le second bras oscillant (2), le corps de levier (3) et l'élément de limitation (4) forment une unité de bras oscillant, le mécanisme d'arbre rotatif (100) comprend au moins deux unités de bras oscillant, et deux des unités de bras oscillant sont disposées symétriquement par rapport à l'axe central (X) de la base (5).

14. Le mécanisme d'arbre rotatif (100) selon l'une quelconque des revendications 1 à 5, dans lequel le premier bras oscillant (1), le second bras oscillant (2) et l'élément de limitation (4) sont agencés séquentiellement dans la direction des axes de rotation, il y a une première encoche (25) sur un côté qui est celui du second bras oscillant (2) et qui est éloigné du premier bras oscillant (1), et l'élément de limitation (4) est au moins partiellement situé dans la première encoche (25) ; et/ou
il y a une seconde encoche (26) sur un côté qui est celui du second bras oscillant (2) et qui est proche du premier bras oscillant (1), le premier bras oscillant (1) comporte une partie d'extension (12) qui s'étend dans la seconde encoche (26), et le corps de levier (3) est fixé à la partie d'extension (12).

15. Un dispositif électronique, comprenant :
le mécanisme d'arbre rotatif (100) selon la revendication 13 ;
deux parties de corps principal (200) reliées via le mécanisme d'arbre rotatif (100) sur deux côtés du mécanisme d'arbre rotatif (100) par rapport à l'axe central (X) de la base (5) ; et
un écran flexible (300) qui est supporté sur les parties de corps principal (200) sur les deux côtés ;
dans lequel à la fois le premier bras oscillant (1) et l'élément de limitation (4) des au moins deux unités de bras oscillant sont reliés aux parties de corps principal (200) correspondantes de manière fixe, intégrale ou de manière limitative ; et
dans lequel les premiers bras oscillants (1) sont configurés pour entraîner les parties de corps principal (200) correspondantes en rotation pendant la rotation.
